# EUROPEAN PATENT SPECIFICATION

(11) **EP 1 002 704 B1**
(45) Date of publication and mention of the grant of the patent: **08.02.2006**
(21) Application number: 99123303.2
(22) Date of filing: 22.11.1999
(51) Int. Cl.: B60R 25/00, B60R 25/04

(54) **Vehicle theft prevention device**
Kraftfahrzeug-Diebstahlsicherung
Dispositif anti-vol pour véhicule

(30) Priority: 20.11.1998 JP 33086998; 04.03.1999 JP 5660599
(43) Date of publication of application: 24.05.2000
(73) Proprietor: Kabushiki Kaisha MORIC, Shuchi-gun, Shizuoka-ken (JP)
(72) Inventor: Mitsuaki, Maeda, c/o Kabushiki Kaisha Aiaishi, Iwata-Shi, Shizuoka-ken (JP)
(74) Representative: Grünecker, Kinkeldey, Stockmair & Schwanhäusser Anwaltssozietät

(56) References cited:
- EP-A- 0 816 192
- WO-A-93/04899
- DE-A- 4 434 655

## Description

This invention relates to a vehicle theft prevention device.

WO-A-9304899 discloses such a vehicle theft prevention device having an automatic setting means setting a system to be activated by turning a main switch of the vehicle at off position and comprising a main switch operation detecting means adapted to detect an additional operation of said main switch operable by a key and a control means.

There is a conventionally known arrangement for preventing motorcycles from being stolen, with a constitution to produce an alarm sound by detecting a change in the attitude of a parked vehicle (for instance those disclosed in JP-A-6-312647, JP-A-6-305397, etc.). Another example of such an arrangement is disclosed in a JP-A-U-4-15588 in which a system is automatically set when the main switch is turned off.

With such conventional arrangements, inadvertent failure to set the system is prevented because the system is automatically set when the main switch is turned off as the rider gets off. On the other hand, if the system has been already set when the vehicle is fueled or serviced at a gas station, then an unwanted alarm sound is caused to be generated when the vehicle is moved. Therefore, a remote control for deactivating the system is used to prevent the alarm sound from being produced accidentally in such cases as described above. As a result, a remote control device is required, which causes the trouble of carrying and operating the remote control device. Providing the remote control device also brings about cost.

Accordingly, it is an objective of the present invention to provide a vehicle theft prevention device as indicated above facilitating with simple technical means to control the system without using a remote control.

This objective is solved by a vehicle theft prevention device according to claim 1.

Moreover, it is possible that when the main switch is turned off said main switch operation detecting means is adapted to detect that in said additional operation of said main switch the key is turned to a position other than the on position when said main switch is turned on from the state of said system being set and that said control means then deactivates the system.

Therefore, in a preferred embodiment, the vehicle theft prevention device has an automatic setting means for automatically setting a system by turning off the main switch of the vehicle, wherein an additional operation of said main switch with a key to a position other than the on position when said main switch is turned on from the state of said system being set is detectable with main switch operation detecting means, and said system can be deactivated with control means.

Moreover, it is possible that the vehicle theft prevention device having automatic setting means for automatically setting a system by turning off the main switch of the vehicle, wherein an additional operation of said main switch with a key to a position other than the off position when said main switch is turned off is detected with main switch operation detecting means, and control means prevents said system from being set, and that: an additional operation of said main switch with the key to a position other than the on position when said main switch is turned on from the state of said system being set is detected with said main switch operation detecting means, and said control means deactivates the system.

In a further preferred embodiment, the vehicle theft prevention device has an immobilizing function of making an engine inoperative as the ignition circuit of the engine is shut off and a system is automatically set when the main switch of the vehicle is turned off, wherein an additional operation of said main switch with a key to a position other than the on position when said main switch is turned on from the state of said system being set, with the period of time taken from the start of operating said main switch to the on state being within a specified length, is detected with main switch operation detecting means, and control means deactivates the immobilizing function.

According to another preferred embodiment of the invention, there is given a vehicle theft prevention device having an immobilizing function of making an engine inoperative as the ignition circuit of the engine is shut off and a system is automatically set when the main switch of the vehicle is turned off, and a function of producing an alarm sound when a specified period of time elapses after said main switch is turned on with a key, wherein in the case an additional operation of said main switch with the key is made to a position other than the on position when the main switch is turned on from the state of said system being set, and the period of time taken from the start of operating said main switch to the on state is within a specified length, is detectable with main switch operation detecting means, and control means deactivates said immobilizing function and prevents the alarm sound from being generated.

In addition, it is possible that a caution sound is produced before producing the alarm sound.

Moreover, in a further preferred embodiment, the vehicle theft prevention device has automatic setting means for automatically setting a system by turning of the main switch of the vehicle, wherein an additional operation of said main switch with a key to a position other than the off position when said main switch is turned off is detectable with the main switch operation detecting means, and the control means prevent said system from producing an alarm sound, and an additional operation of said main switch with a key to a position other than the on position when said main switch is turned on from the state of said system being set is detectable with said main switch operation detecting means, and the control means allow to prevent said system from generating an alarm sound.

In addition to the configuration above, the system may be provided with an immobilizing function of making an engine inoperative by setting the system such that the ignition circuit of the engine is shut off.

Other preferred embodiments of the present invention are laid down in further dependent claims.

In the following, the present invention is explained in greater detail with respect to several embodiments thereof in conjunction with the accompanying drawings, wherein:
FIG. 1 is a block diagram of a vehicle theft prevention device of the first embodiment of the invention;
FIG. 2 is an exploded oblique view of the vehicle theft prevention device of the first embodiment:
FIG. 3 is a plan view of the vehicle theft prevention device of the first embodiment:
FIG. 4 is a front view of an indicator lamp of the first embodiment:
FIG. 5 is an operation timing chart of the vehicle theft prevention device of the first embodiment;
FIG. 6 is an operation table of the vehicle theft prevention device of the first embodiment;
FIG. 7 a block diagram of a vehicle theft prevention device of the second embodiment of the invention;
FIG. 8 is an operation timing chart of the vehicle theft prevention device of the second embodiment; and
FIG. 9 is an operation timing chart of the vehicle theft prevention device of the third embodiment.

### First embodiment.

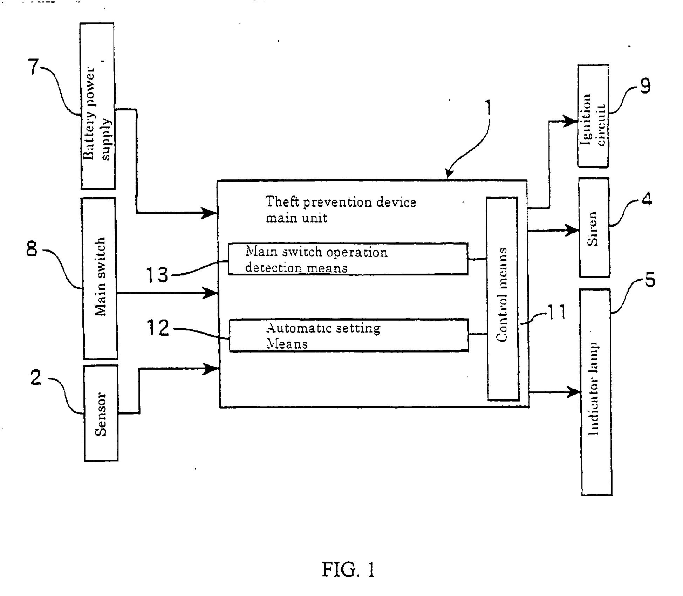

FIGs. 1 to 6 show the first embodiment of the invention.

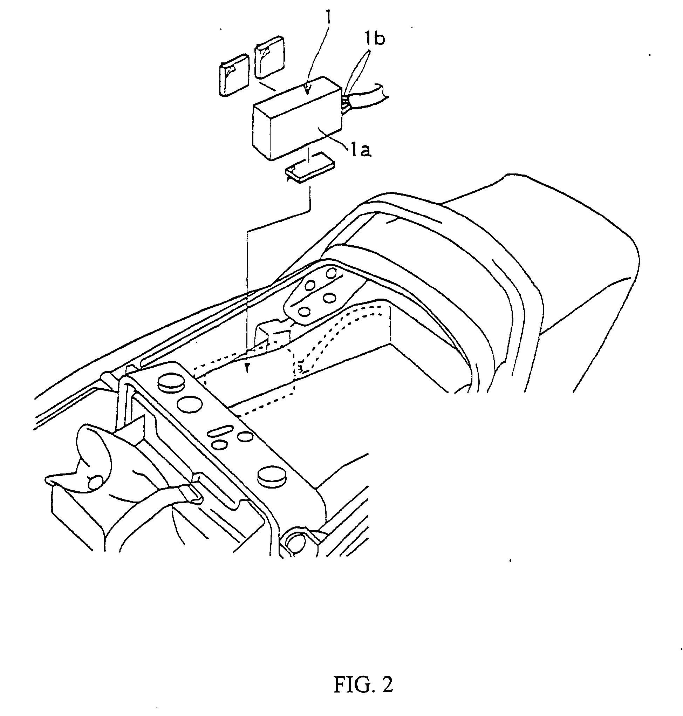

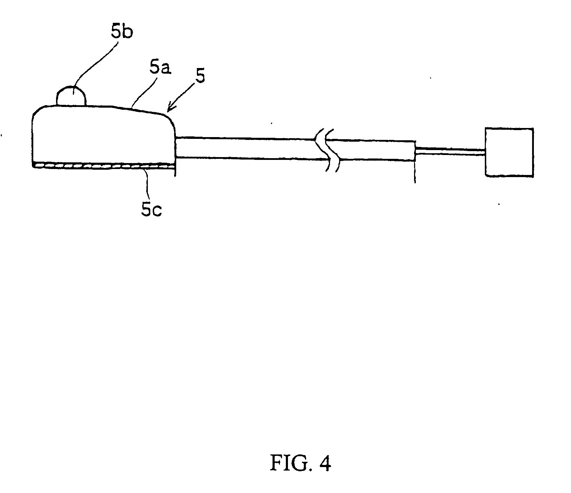

First, the constitution will be described. The theft prevention device of this embodiment comprises a main unit 1, a sensor 2, a siren 4, an indicator lamp (LED unit) 5, and others (See FIGs. 2 and 4).

The main unit 1 receives instructions from a main switch 8 to perform controls such as setting and deactivating the system, and lighting the indicator lamp 5, and also controls the actuation of the siren 4 with signals from the sensor 2 or by an unauthorized operation (operation without system deactivation) of the main switch (main SW) 8.

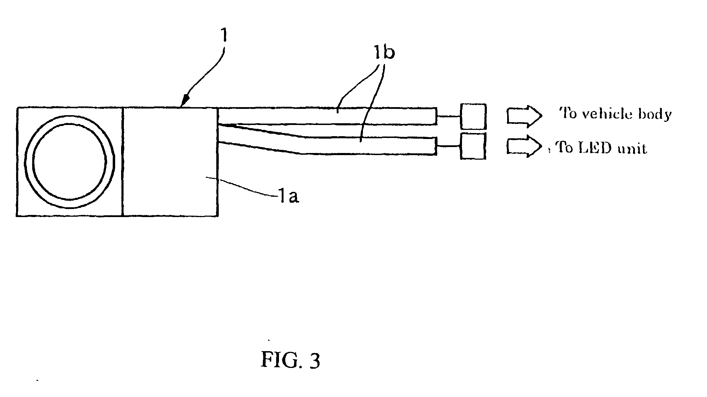

As shown in FIGs. 2 and 3, the main unit 1 is housed together with the sensor 2 and the siren 4 in a case 1a and connected to them. A plurality of leads 1b extend from the case 1a and are connected as shown in FIG. 1 to a battery power supply 7, the main switch 8, an engine ignition circuit 9, and the indicator lamp 5, etc. located on the vehicle body side to receive instruction signal inputs.

The sensor 2 is adapted to detect the tilt of the vehicle in the entire direction range of 360 degrees.

The indicator lamp 5 is constituted to indicate the set and reset states of the system by lighting up and flashing. As shown in FIG. 4, the indicator lamp body 5a has a light emitting portion 5b in its top central part, and a double side adhesive tape 5c on its bottom surface, and the indicator lamp 5 is attached to part of the vehicle body such as the fuel tank top surface (not shown) by means of the double side adhesive tape 5c.

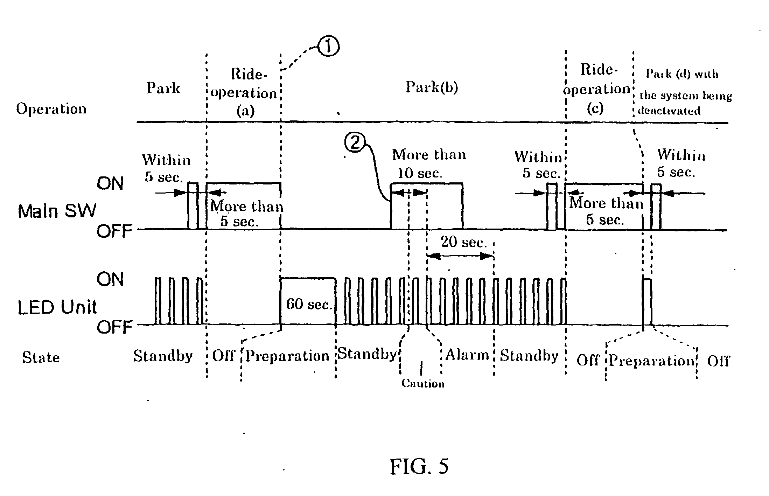

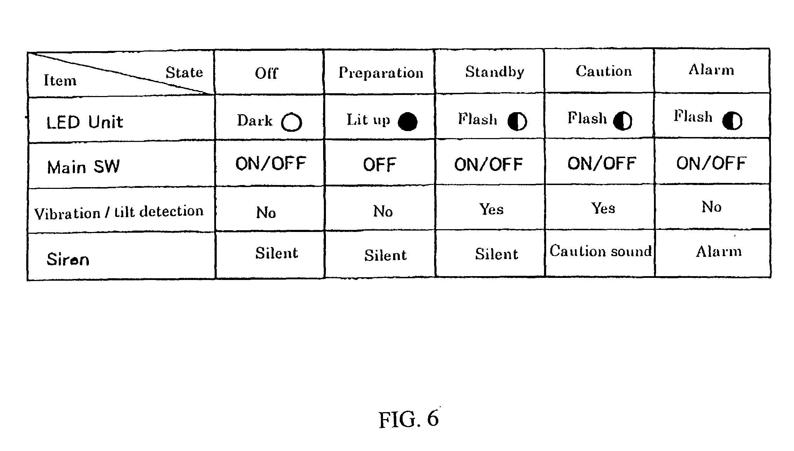

The indications of the indicator lamp 5 and the operation states of the system are controlled as shown in FIGs. 5 and 6 with the theft prevention device main unit 1.

The theft prevention device has the following functions.

### (1) Basic function

### (1)-1 Alarm function:

An alarm sound is produced when the sensor 2 detects a change in the vehicle attitude or when an unauthorized operation (operation without resetting the system) of the main switch 8 is made.

Thus, it is arranged to issue a warning when the vehicle is shaken or moved by an unauthorized person.

### (1)-2 Immobilizing function:

When the system is set, the engine ignition circuit 9 is shut off so that the engine cannot be operated.

Thus, the engine cannot be started even if the main switch 8 is operated by an unauthorized person.

### (1)-3 Operation indicating function:

The operation states of the system are indicated with the indicator lamp 5 as described above.

Thus, that the system is working is indicated and an unauthorized person is discouraged from operating the vehicle.

Next, the constitution and function of the theft prevention device main unit 1 will be described.

### (1) Setting the system:

The system is automatically set when the main switch 8 of a motorcycle or vehicle is turned off.

### (1)-1 Automatic setting:

As shown in FIGs. 5 and 6, when the motorcycle in a driving state (a) is stopped and the main switch 8 is turned off at the time point (1), the automatic setting means 12 of the theft prevention device main unit 1 causes the indicator lamp 5 to light up for 60 seconds. This is the preparatory state. After that, the indicator lamp 5 flashes about every 2 seconds. Thus, the system is set (in a standby state). In this way, since the system is set to the on state as interlocked with the main switch 8, there is no possibility of inadvertently failing to set the system.

In this standby state, if the main switch 8 is turned on at the time point (2) by an unauthorized person, a caution sound is produced in 5 seconds (caution state). If the on state remains unchanged for 10 seconds, the siren 4 sounds for 20 seconds (alarm state), and the control returns to the standby state again. Moreover, in this case, the engine is made inoperable as the ignition circuit 9 is controlled with the immobilizing function.

When vibration or a tilt of more than a specified amount is detected in the standby state, the siren 4 produces a caution sound (caution state). When vibration or a tilt of more than a specified amount is detected again within 10 seconds, the siren 4 sounds for 20 seconds (alarm state), and the control returns to the standby state again.

Next, in the case the parked state (b) is changed to the ride-operation state (c) (when the main switch 8 is turned on from the state of the system being set), if the main switch 8 is operated with the key starting from the off state to turn on, off, and on within 5 seconds (to perform an additional operation of the main switch 8 with the key to a position other than the on position), the operation is detected with a main switch operation detection means 13. To put it more precisely, it is arranged as follows: The time point when the off state is changed to the on state is detected with a sensor 2, a timer starts with a signal from the sensor 2, and the fact that the state is again on within 5 seconds is detected. As the signal from the main switch operation detection means 13 is inputted to control means 11, the system is deactivated and the engine can be started.

When parking (d) the vehicle in the ride-operation state (c) (when the main switch 8 is turned off), in some cases the rider wants to set the system so that it is not set automatically. In that case, if the main switch 8 in the on state is turned off, on, and off again with the key (to perform an additional operation of the main switch 8 with the key to a position other than the off position) within 5 seconds, the operation is detected with the main switch operation detection means 13. Then a signal from the main switch operation detection means 13 is inputted to the control means 11 to make the system inoperative.

In this way, the system is not set automatically even if the main switch 8 is turned off, and the alarm sound is not produced as when the vehicle is serviced or fueled at a gas station.

When the vehicle is operated in that state, since the system is inoperative, the engine can be started simply by turning on the main switch 8 without the alarm sound produced.

This embodiment is arranged that, when the vehicle is parked (d) (when the main switch 8 is turned off) in the ride-operation state (c), the operation of the main switch 8 with the key by turning off, on, and again off (an additional operation with the key to a position other than the off position) within 5 seconds makes the entire system not to be set automatically, the alarm sound not to be produced, and the immobilizing function to be inoperative. However, it is also possible to arrange that although part of the system is operative, namely the immobilizing function and the siren 4 sounding function by the unauthorized operation of the main switch 8 are operative, only the alarm of the siren 4 with the sensor 2 is deactivated. This is effective when the rider does not want the alarm sound produced by vibration or the like as the vehicle is parked in a gas station, in a busy street, or in midnight.

### Second embodiment

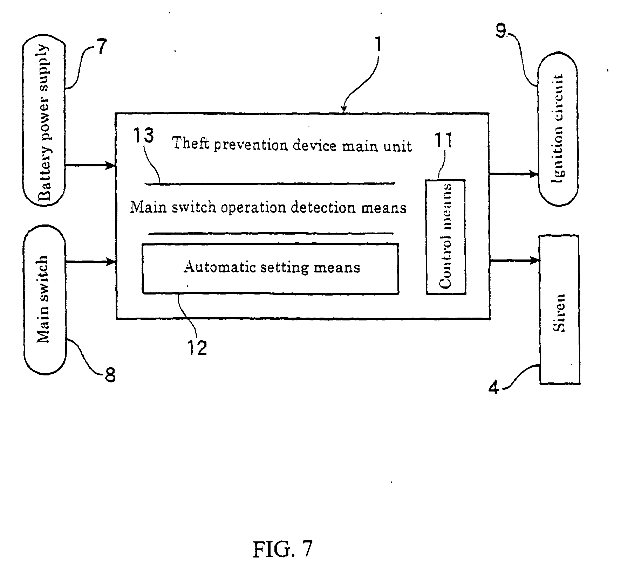

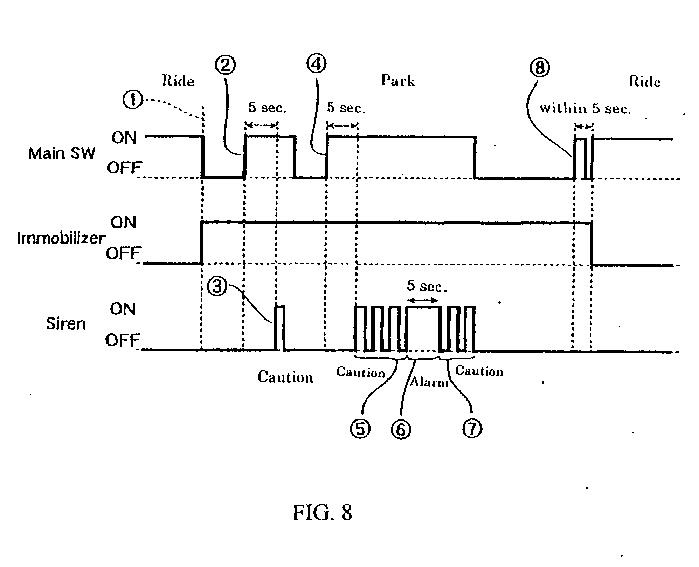

FIGs. 7 and 8 show the second embodiment of the invention.

Unlike the first embodiment, the second embodiment as shown in FIG. 7 is not provided with the sensor 2 and the indicator lamp 5, and is constituted that the siren 4 produces an alarm sound after a specified period of time from turning on the main switch 8 in the state of the system being set operative.

Now the function of the theft prevention device of the second embodiment will be described in reference to the time chart of FIG. 8.

When the main switch 8 of a motorcycle is turned off after stopping the vehicle in the ride state (with the main switch on), at the time point (1), the automatic setting means 12 of the theft prevention device main unit 1 turns on the immobilizing function of the system. In this way, since the system is turned on as interlocked with the main switch 8, inadvertent failure in setting the system is avoided.

When the rider has made a mistake of only turning on the main switch 8 at the time point (2), the siren 4 produces a caution sound in 5 seconds (3). As a result, the rider recognizes that the mistake has been made and can stop the caution sound by turning off the main switch 8 before the siren 4 produces an alarm sound. The immobilizing function remains in the on state.

If the main switch 8 is operated by an unauthorized person in the state of the system being on at the time point (4), the siren 4 produces intermittent caution sounds (5) in 5 seconds. If the main switch 8 further remains on, a continuous alarm sound (6) is produced for 5 seconds. After the alarm sound (6), again the intermittent caution sounds (7) are produced.

A normal operation is turning the main switch 8 with the key in the state of the system being on to the off, and on positions from the time point (8) within (a specified period of time) 5 seconds. The operation of the main switch 8 to the off position is the operation of the main switch 8 with the key to the position other than the on position. The operation is detected with the main switch operation detection means 13. The detection signal from the main switch operation detection means 13 is inputted to the control means 11. As the system is deactivated, the immobilizing function is turned off, and the siren 4 is deactivated.

Therefore, even if the owner of the vehicle forgets to pull out the key, a person who does not know the method of operation described above cannot start the engine and drive the vehicle, and ends up in causing the alarm sound to be produced.

In this way, the system can be deactivated with the key operation only, namely a remote control device need not be provided, and the trouble of carrying and operating the remote control device is saved.

Inadvertent failure in pulling off the key is prevented because caution sounds are produced if the main switch 8 is turned off and a specified period of time elapses with the key being left in the main switch 8.

If it is arranged that an alarm sound is produced when a specified period of time elapses in the state of the main switch 8 being off, the rider is alerted that the immobilizing function is turned on.

### Third embodiment.

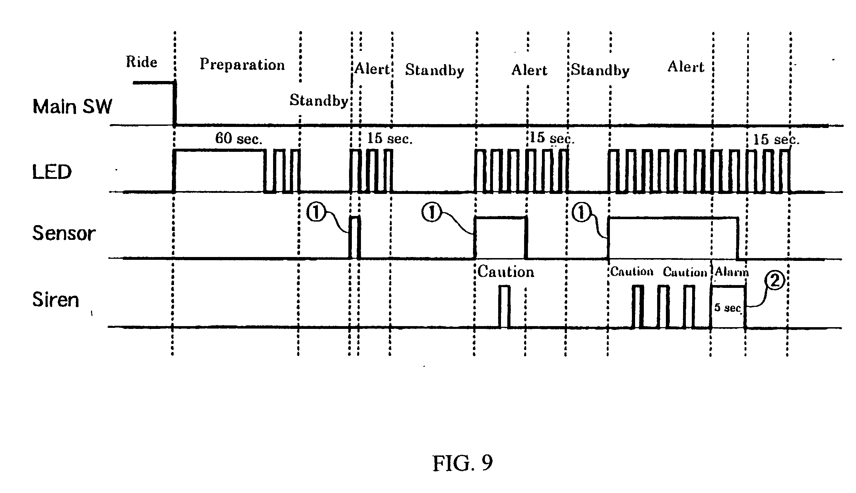

FIG. 9 shows the third embodiment of the invention.

In the first embodiment, the indicator lamp (LED) 5 is arranged to light up or flash constantly when the system is set. In the third embodiment, however, the system is controlled as follows: The lamp does not to light up or flash in the standby state. When a signal (1) is inputted from the sensor 2, the system becomes an alert state with the indicator lamp (LED) 5 flashing. When 15 seconds elapse after the input of the signal (1) from the sensor 2 stops or after the alarm (2) of the siren 4 ends, the system becomes the standby state and the flashing of the lamp stops. The system is also controlled that the indicator lamp 5 flashes when an unauthorized operation is made in the standby state, and that when a specified period of time elapses after the main switch is turned from the on state to the off state, a standby state occurs in which the indicator lamp 5 stops flashing. This reduces the electric power consumption with the indicator lamp 5.

The above-described embodiments are arranged that the system is deactivated by turning the main switch with the key to positions on, off, and on, or to positions off, on, and off, within 5 seconds. However, it is a matter of course that the invention is not limited to the above but an operation to a position other than the on or off position may be added. To put it concretely, an operation of turning to a "Pos" position may be added when turning from the off to on state, in such an order as from off to Pos, off, and on; or when turning from the on to off state, in the order of on, off, Pos, to off. In that case, the main switch has the positions of on, off, handlebar lock, and Pos in the counterclockwise direction, and is constituted that the turn signal lamp is lit up when the switch is in the Pos position and the vehicle is standing. However, it is more effective as in the embodiments of the invention to impose the restriction of performing the operation within the specified period of time, 5 seconds for instance. That is to say, even if a person who knows the operation procedure finds it difficult to complete the above-described operation procedure within the time period in an attempt of doing it with any means other than the key. Therefore, if an unauthorized operation is attempted, an alarm sound is produced. Moreover, the system of the invention has the functions of (1) immobilizing, (2) producing an alarm sound by an unauthorized operation of the main switch, and (3) producing an alarm sound by the vibration sensor. According to the invention, those functions may be used singly or in any combination. It may be arranged that only the function (2) is provided, and that when the system is turned off, that function only is turned off.

According to the invention as described in the claims above, the system functions of producing the alarm sound and/or immobilizing the vehicle can be turned off without using a remote control device. Therefore, it is possible to prevent the alarm sound from being produced when the vehicle is serviced or fueled at a gas station, and to start the engine. Since the invention eliminates the need for a remote control device, trouble of carrying and operating the remote control device is saved.

Further, it is possible to produce a caution sound before producing an alarm sound. Therefore, the owner of the vehicle immediately learns that a mistake has been made, so that the owner can correct the incorrect state before an alarm sound is produced.

## Claims

1. A vehicle theft prevention device for a motorcycle-type vehicle having automatic setting means (12) setting a system to be activated by turning a main switch (8) of the vehicle at off position, comprising a main switch operation detecting means (13) adapted to detect an additional operation of said main switch (8) operable by a key, and a control means (11) adapted to prevent said system from being set, whereby
the automatic setting of the system can be prevented, without starting an engine of the vehicle, by operating the key according to a predetermined turning pattern to off position within a specified period of time, so that the system is inoperative and the engine is startable and/or the vehicle is movable under that inoperative state of the system.

2. A vehicle theft prevention device according to claim 1, **characterized in that** when the main switch (8) is turned off said main switch operation detecting means (13) is adapted to detect that in said additional operation of said main switch (8) the key is turned to a position other than the on position when said main switch (8) is turned on from the state of said system being set and that said control means (11) then deactivates the system.

3. A vehicle theft prevention system according to claim 1 or 2, **characterized in that** the additional operation of said main switch (8) with the key to a position other than the off position when said main switch (8) is turned off is detected with the main switch operation detecting means (13), and the control means (11) prevents said system from being set, and that
the additional operation of said main switch (8) with the key to a position other than the on position when said main switch (8) is turned on from the state of said system being set is detected with said main switch operation detecting means (13), and that said control means (11) then deactivates the system.

4. A vehicle theft prevention device according to at least one of the preceding claims 1 to 3, **characterized in that** said control means (11) being adapted such that an immobilizing function is activatable to make an engine of the vehicle inoperative by shutting off an ignition circuit and that the system automatically is set by turning off the main switch (8).

5. A vehicle theft prevention device according to claim 4 **characterized in that** the additional operation of said main switch (8) with the key to a position other than the on position when said main switch (8) is turned on from the state of said system being set, with the period of time taken from the start of operating said main switch (8) to the on state being within a specified length, is detectable with the main switch operation detecting means (13), and that the control means (11) deactivates the immobilizing function.

6. A vehicle theft prevention device according to claim 4 or 5, **characterized in that** a function of generating an alarm sound when a specified period of time elapses after the main switch (8) is turned on is activatable.

7. A vehicle theft prevention device according to claim 6, **characterized in that** in the case the additional operation of said main switch (8) with the key is made to a position other than the on position when said main switch (8) is turned on from the state of said system being set, and the period of time taken from the start of operating said main switch (8) to the on state is within a specified length, is detectable with main switch operation detecting means (13), and the control means (11) deactivates said immobilizing function and prevents the alarm sound from being generated.

8. A vehicle theft prevention device according to at least one of the preceding claims 1 to 7, **characterized in that** a caution sound is generatable before generating an alarm sound.

9. A vehicle theft prevention device according to at least one of the preceding claims 1 to 8, **characterized in that** the additional operation of said main switch (8) with the key to a position other than the off position when said main switch (8) is turned off is detectable with the main switch operation detecting means (13), and the control means (11) prevent said system from generating an alarm sound, and that
the additional operation of said main switch (8) with the key to a position other than the on position when said main switch (8) is turned on from the state of said system being set is detectable with said main switch operation detecting means (13), and the control means (11) prevent said system from generating an alarm sound.

10. A vehicle theft prevention device according to at least one of the preceding claims 1 to 3 or 5 to 9, **characterized by** providing with an immobilizing function of making an engine inoperative by setting the system such that the ignition circuit (9) of the engine is shut off.

## Revendications

1. Dispositif anti-vol pour un véhicule de type motocyclette comportant un moyen de réglage automatique (12) réglant un système devant être activé en commutant un interrupteur principal (8) du véhicule à la position d'arrêt, comprenant un moyen de détection d'actionnement d'interrupteur principal (13) conçu pour détecter un actionnement supplémentaire dudit interrupteur principal (8) actionnable par une clé, et un moyen de commande (11) conçu pour empêcher ledit système d'être activé, moyennant quoi
le réglage automatique du système peut être empêché, sans démarrer un moteur du véhicule, en actionnant la clé conformément à un modèle prédéterminé de commutation à la position d'arrêt dans une période de temps spécifiée, de sorte que le système est inopérant et le moteur peut être démarré et/ou le véhicule peut être déplacé dans cet état inopérant du système.

2. Dispositif anti-vol pour véhicule selon la revendication 1, **caractérisé en ce que** lorsque l'interrupteur principal (8) est commuté sur arrêt, ledit moyen de détection d'actionnement d'interrupteur principal (13) est conçu pour détecter que pendant ledit actionnement supplémentaire dudit interrupteur principal (8), la clé est commutée à une position autre que la position de marche lorsque ledit interrupteur principal (8) est commuté sur marche à partir de l'état dudit système activé, et **en ce que** ledit moyen de commande (11) désactive ensuite le système.

3. Système anti-vol pour véhicule selon la revendication 1 ou 2, **caractérisé en ce que** l'actionnement supplémentaire dudit interrupteur principal (8) avec la clé à une position autre que la position d'arrêt, lorsque ledit interrupteur principal (8) est commuté sur arrêt, est détecté à l'aide du moyen de détection d'actionnement d'interrupteur principal (13), et le moyen de commande (11) empêche ledit système d'être activé, et **en ce que**
l'actionnement supplémentaire dudit interrupteur principal (8), avec la clé à une position autre que la position de marche lorsque ledit interrupteur principal (8) est commuté sur marche à partir de l'état dudit système activé, est détecté à l'aide dudit moyen de détection d'actionnement d'interrupteur principal (13), et **en ce que** ledit moyen de commande (11) désactive ensuite le système.

4. Dispositif anti-vol pour véhicule selon l'une au moins des revendications précédentes 1 à 3, **caractérisé en ce que** ledit moyen de commande (11) est conçu de sorte qu'une fonction d'immobilisation est activable pour rendre un moteur du véhicule inopérant en coupant un circuit d'allumage et **en ce que** le système est activé automatiquement en commutant l'interrupteur principal (8) sur arrêt.

5. Dispositif anti-vol pour véhicule selon la revendication 4, **caractérisé en ce que** l'actionnement supplémentaire dudit interrupteur principal (8), avec la clé à une position autre que la position de marche lorsque ledit interrupteur principal (8) est commuté sur marche à partir de l'état dudit système activé, la période de temps écoulée à partir du début de l'actionnement dudit interrupteur principal (8) à l'état de marche étant d'une longueur spécifiée, est détectable à l'aide du moyen de détection d'actionnement d'interrupteur principal (13), et **en ce que** le moyen de commande (11) désactive la fonction d'immobilisation.

6. Dispositif anti-vol pour véhicule selon la revendication 4 ou 5, **caractérisé en ce qu'**une fonction de production d'un signal d'alarme sonore une fois qu'une période de temps spécifiée s'est écoulée après que l'interrupteur principal (8) a été commuté sur marche, est activable.

7. Dispositif anti-vol pour véhicule selon la revendication 6, **caractérisé en ce que** le cas où l'actionnement supplémentaire dudit interrupteur principal (8) à l'aide de la clé est réalisé à une position autre que la position de marche lorsque ledit interrupteur principal (8) est commuté sur marche à partir de l'état dudit système activé, et la période de temps écoulée depuis le début de l'actionnement dudit interrupteur principal (8) à l'état de marche est d'une longueur spécifiée, est détectable à l'aide du moyen de détection d'actionnement d'interrupteur principal (13), et le moyen de commande (11) désactive ladite fonction d'immobilisation et empêche le signal d'alarme sonore d'être produit.

8. Dispositif anti-vol pour véhicule selon l'une au moins des revendications précédentes 1 à 7, **caractérisé en ce qu'**un signal d'avertissement sonore peut être produit avant la production d'un signal d'alarme sonore.

9. Dispositif anti-vol pour véhicule selon l'une au moins des revendications précédentes 1 à 8, **caractérisé en ce que** l'actionnement supplémentaire dudit interrupteur principal (8) avec la clé à une position autre que la position d'arrêt, lorsque ledit interrupteur principal (8) est commuté sur marche, est détectable à l'aide du moyen de détection d'actionnement d'interrupteur principal (13), et le moyen de commande (11) empêche ledit système de produire un signal d'alarme sonore, et **en ce que**
l'actionnement supplémentaire dudit interrupteur principal (8) avec la clé à une position autre que la position de marche, lorsque ledit interrupteur principal (8) est commuté sur marche à partir de l'état dudit système activé, est détectable à l'aide dudit moyen de détection d'actionnement d'interrupteur principal (13), et le moyen de commande (11) empêche ledit système de produire un signal d'alarme sonore.

10. Dispositif anti-vol pour véhicule selon l'une au moins des revendications précédentes 1 à 3 ou 5 à 9, **caractérisé par** une fonction d'immobilisation rendant un moteur inopérant en mettant le système dans un état tel que le circuit d'allumage (9) du moteur est coupé.

## Patentansprüche

1. Fahrzeug- Diebstahlverhinderungsvorrichtung für ein Fahrzeug vom Motorrad-Typ, die eine automatische Festlegungseinrichtung (12) hat, die ein System festlegt, durch Drehen eines Hauptschalters (8) des Fahrzeuges aus einer AUS- Position aktiviert zu werden, mit einer Hauptschalterbetätigungs- Erfassungseinrichtung (13), vorgesehen um eine zusätzliche Betätigung des Hauptschalters (8) zu erfassen, betätigbar durch einen Schlüssel, und eine Steuerungseinrichtung (11), vorgesehen um zu verhindern, dass das System festgelegt wird,
wobei
das automatische Festlegen des Systems verhindert werden kann, ohne den Motor des Fahrzeuges zu starten, durch das Betätigen des Schlüssels entsprechend eines vorbestimmten Drehmusters in eine AUS- Position innerhalb eines vorbestimmten Zeitraums, so dass das System außer Betrieb ist und der Motor gestartet werden kann und / oder das Fahrzeug in diesem Nicht Betriebszustand des Systems bewegbar ist.

2. Fahrzeug- Diebstahlverhinderungsvorrichtung nach Anspruch 1, **dadurch gekennzeichnet, dass** dann, wenn der Hauptschalter (8) ausgeschaltet ist, die Hauptschalterbetätigungs- Erfassungseinrichtung (13) vorgesehen ist, zu erfassen, dass bei der zusätzlichen Betätigung des Hauptschalters (8) der Schlüssel in eine Position gedreht wird, die anders als die EIN- Position ist, wenn der Hauptschalter (8) aus dem Zustand des Systems, das festgelegt ist, eingeschaltet wird, und dass die Steuereinrichtung (11) dann das System deaktiviert.

3. Fahrzeug- Diebstahlverhinderungsvorrichtung nach Anspruch 1 oder 2, **dadurch gekennzeichnet, dass** die zusätzliche Betätigung des Hauptschalters (8) mit einem Schlüssel in eine Position, die anders als die AUS- Position ist, wenn der Hauptschalter (8) ausgeschaltet ist, mit der Hauptschalterbetätigungs- Erfassungseinrichtung (13) erfasst wird, und die Steuereinrichtung (11) verhindert, dass das System festgelegt wird, und dass
die zusätzliche Betätigung des Hauptschalters (8) mit dem Schlüssel in eine Position, die anders als die Position ist, wenn der Hauptschalter (8) eingeschaltet wird aus dem Zustand des Systems, das festgelegt ist, mit der Hauptschalterbetätigungs- Erfassungseinrichtung (13) erfasst wird, und die Steuereinrichtung (11) dann das System deaktiviert.

4. Fahrzeug- Diebstahlverhinderungsvorrichtung nach zumindest einem der vorhergehenden Ansprüche 1 bis 3, **dadurch gekennzeichnet, dass** die Steuereinrichtung (11) derart vorgesehen ist, dass eine Funktion zum Unbeweglichmachen aktivierbar ist, um den Motor des Fahrzeuges durch Abschalten eines Zündkreislaufes außer Betrieb zu nehmen und dann das System durch Ausschalten des Hauptschalters (8) automatisch festgelegt wird.

5. Fahrzeug- Diebstahlverhinderungsvorrichtung nach Anspruch 4, **dadurch gekennzeichnet, dass** die zusätzliche Betätigung des Hauptschalters (8) mit dem Schlüssel in eine Position, die anders als die Position ist, wenn der Hauptschalter (8) aus dem Zustand, in dem das System festgelegt ist, wobei der Zeitraum von dem Start der Betätigung des Hauptschalters (8) zu dem EIN- Zustand, innerhalb einer bestimmten Dauer ist, mit der Hauptschalterbetätigungs- Erfassungseinrichtung (13) erfassbar ist, und dass die Steuereinrichtung (11) die Funktion zum Unbeweglichmachen deaktiviert.

6. Fahrzeug- Diebstahlverhinderungsvorrichtung nach Anspruch 4 oder 5, **dadurch gekennzeichnet, dass** eine Funktion der Erzeugung eines Alarmklanges aktivierbar ist, wenn ein bestimmter Zeitraum vergeht, nachdem der Hauptschalter (8) eingeschaltet worden ist.

7. Fahrzeug- Diebstahlverhinderungsvorrichtung nach Anspruch 6, **dadurch gekennzeichnet, dass** in dem Fall, dass die zusätzliche Betätigung des Hauptschalters (8) mit dem Schlüssel in eine Position, die anders als die Position ist, wenn der Hauptschalter (8) eingeschaltet ist, aus dem Zustand, bei dem als System festgelegt ist, und der Zeitraum von dem Start der Betätigung des Hauptschalters (8) in den EIN- Zustand, innerhalb einer bestimmten Dauer ist, mit der Hauptschalterbetätigungs- Erfassungseinrichtung (13) erfassbar ist, und die Steuereinrichtung (11) die Funktion zum Unbeweglichmachen deaktiviert und verhindert, dass der Alarmklang erzeugt wird.

8. Fahrzeug- Diebstahlverhinderungsvorrichtung nach zumindest einem der vorhergehenden Ansprüche 1 bis 7, **dadurch gekennzeichnet, dass** ein Wamgeräusch vor dem Erzeugen eines Alarmklanges erzeugt wird.

9. Fahrzeug- Diebstahlverhinderungsvorrichtung nach zumindest einem der vorhergehenden Ansprüche 1 bis 8, **dadurch gekennzeichnet, dass** die zusätzliche Betätigung des Hauptschalters (8) mit dem Schlüssel in eine Position, die anders als die AUS- Position ist, wenn der Hauptschalter (8) ausgeschaltet ist, mit der Hauptschalterbetätigungs- Erfassungseinrichtung (13) erfassbar ist, und die Steuereinrichtung (11) das System am Erzeugen eines Alarmklanges hindert, und dass
die zusätzliche Betätigung des Hauptschalters (8) mit dem Schlüssel in eine Position, die anders als die EIN- Position ist, wenn der Hauptschalter (8) aus dem festgelegten Zustand des Systems eingeschaltet wird, mit der Hauptschalterbetätigungs- Erfassungseinrichtung (13) erfassbar ist, und die Steuereinrichtung (11) das System am Erzeugen eines Alarmklanges hindert.

10. Fahrzeug- Diebstahlverhinderungsvorrichtung nach zumindest einem der vorhergehenden Ansprüche 1 bis 3 oder 5 bis 9, **gekennzeichnet durch** Vorsehen einer Funktion zum Unbeweglichmachen des Nicht- Betriebes des Motors, **durch** derartiges Festlegen des Systems, dass der Zündschaltkreis (9) des Motors abgeschaltet wird.
